(19) Europäisches Patentamt
European Patent Office
Office européen des brevets

(11) Publication number: 0 191 966
A2

(12) # EUROPEAN PATENT APPLICATION

(21) Application number: 85303096.3

(22) Date of filing: 01.05.85

(51) Int. Cl.⁴: C 08 G 73/14
C 09 D 3/70, C 07 D 207/404
C 07 D 209/48

(30) Priority: 23.01.85 US 694095

(43) Date of publication of application:
27.08.86 Bulletin 86/35

(84) Designated Contracting States:
AT BE CH DE FR GB IT LI LU NL SE

(71) Applicant: Gagliani, John
6280 Lance Place
San Diego California 92120(US)

(71) Applicant: Long, John V.
1756 E. Lexington Avenue
El Cajon California 92021(US)

(72) Inventor: Gagliani, John
6280 Lance Place
San Diego California 92120(US)

(72) Inventor: Long, John V.
1756 E. Lexington Avenue
El Cajon California 92021(US)

(74) Representative: Spencer, Graham Easdale et al,
A.A. Thornton & CO Northumberland House 303-306,
High Holborn
London WC1V 7LE(GB)

(54) **Method of making bisimide coating compositions.**

(57) A method of making a bisimide coating composition comprises:

(a) mixing at least one lactam and/or amino acid (component A) with at least one dianhydride (component B) in a mole ratio of A:B of from 0.01:1 to 10:1 to form an N,N'-disubstituted bisimide dicarboxylic acid,

(b) dissolving the product from step (a) in a water-miscible solvent,

(c) mixing water with the solution from step (b) to form a solution comprising from 10% to 80% by weight of water,

(d) mixing at least one aromatic diamine (component C) with the solution from step (c), and

(e) mixing at least one tertiary amine (component D), in an amount of from 2% to 20% by weight based on the water added in step (c), with the solution from step (d) to give the coating composition.



Croydon Printing Company Ltd.

Method of making bisimide coating compositions

The present invention is concerned with polyimide coatings and, more particularly, with stable, water-based bisimide coating compositions and methods for making them.

U.S. Patents 4161477, 4183838, 4183839 and 4442283 disclose certain polyimide compositions which are flame resistant and useful as coatings and adhesives. The coating and adhesive compositions described in these patents are made by first preparing a suitable N,N'-disubstituted bisimide by reacting an aromatic tetracarboxylic acid dianhydride with a lactam or amino acid. The polyimide-forming composition is then prepared by dissolving the bisimide in an organic solvent, such as an aliphatic alcohol, and adding a suitable diamine to produce a viscous liquid containing an intimate, unpolymerised mixture of N,N'-disubstituted aromatic bisimide dicarboxylic acid and diamine which can be converted to a high molecular weight polyimide by the application of heat.

The liquid is diluted to a suitable viscosity with an organic solvent, coated on to a surface, dried, and polymerised by heating at a temperature of from 177° to 316°C for a period of 30 minutes to 5 hours. The resulting coating is tough and highly adherent to various surfaces. It has excellent peel strength and is resistant

to high temperatures, peeling, and abrasion.

The coating materials of the prior art, however, are not suitable for many applications. Often the coating compositions require the addition of flow control or wetting agents in order to give satisfactory coating characteristics. The organic solvents used in the coating compositions are very flammable and require special shipping containers. Solvent recovery facilities are required when drying the coating in order to meet air quality standards. Long term storage is sometimes not practical due to the risk of viscosity changes or gellation of the compositions.

Thus there is a need for improved polyimide coating compositions having a better long-term storage capability, improved wetting characteristics, and reduced flammability.

We have now developed a method for the production of coating compositions and polyimide coatings which reduces or avoids the problems of the prior art mentioned above.

According to the present invention, therefore, there is provided a method of making a bisimide coating composition, which comprises:

(a) mixing at least one lactam and/or amino acid (component A) with at least one dianhydride (component B) in a mole ratio of A:B of from 0.01:1 to 10:1 to form an N,N'-disubstituted bisimide dicarboxylic acid,

(b) dissolving the product from step (a) in a water-miscible solvent,

(c) mixing water with the solution from step (b) to form a solution comprising from 10% to 80% by weight of water,

(d) mixing at least one aromatic diamine (component C) with the solution from step (c), and

(e) mixing at least one tertiary amine (component D), in an amount of from 2% to 20% by weight based on the

water added in step (c), with the solution from step (d) to give the coating composition.

A preferred method according to the present invention comprises heating a mixture of a suitable dianhydride with a suitable lactam and/or amino acid to form an N,N'-disubstituted bisimide dicarboxylic acid, dissolving the product in a water-miscible solvent, adding a suitable quantity of water, adding a suitable diamine and any desired additives, coating the resulting liquid on to the surface to be coated, and drying and curing the coating or adhesive at an elevated temperature. A tough, flexible and substantially defect-free coating is obtained.

Any suitable dianhydrides may be used in the preparation of the compositions of the invention. Typical dianhydrides include those described in U.S. Patents 3282897 and 3310506, and those disclosed in the patents cited earlier. Due to their ready availability at reasonable prices and the excellent coatings produced, the preferred dianhydrides are pyromellitic dianhydride and/or 3,3',4,4'-benzophenone tetracarboxylic acid dianhydride (BTDA). If desired, an aliphatic dianhydride such as 1,2,3,4-butane tetracarboxylic acid dianhydride (BTCD) may be included in the dianhydride component. Generally, at least 50 mol% of the dianhydride component should be aromatic.

Any suitable lactam and/or amino acid may be reacted with the selected dianhydride to produce the required bisimide. Preferably, the lactam has the formula:

$$H_2C-(CH_2)_x-NHCO$$

where x is an integer of from 2 to 7. Of these, the best results are obtained when x = 4, i.e. with caprolactam.

Preferred amino acids are those derived from the preferred lactams. The preferred lactams and amino acids may each be used alone or two or more of them may be combined in any suitable mixture.

While any suitable reaction conditions may be used, excellent results have been obtained when the dianhydride is added to the lactam and/or amino acid, the mixture is heated at a temperature of from $150^{\circ}$ to $250^{\circ}C$ until the condensation reaction is complete (about 20 to 60 minutes), and the water-miscible solvent is then added.

The preferred mole ratio of lactam and/or amino acid to dianhydride is from 0.01:1 to 10:1. Higher proportions of lactam and/or amino acid produce very flexible, low curing temperature coatings, while lower proportions of lactam and/or amino acid produce coatings requiring higher temperature curing to achieve the desired properties. The best results are obtained with ratios of lactam and/or amino acid to dianhydride of from 1:1 to 6:1.

Any suitable solvent which is both water-miscible and acts as a solvent for the bisimide may be used. Suitable solvents include, for example, ethylene glycol monoethyl ether, ethylene glycol monobutyl ether, ethylene glycol monoethyl ether acetate, ethylene glycol monobutyl ether acetate, ethylene glycol, and mixtures of two or more thereof. Of these, ethylene glycol monobutyl ether and ethylene glycol monoethyl ether acetate are preferred. The preferred mole ratio of solvent to lactam and/or amino acid is from 2:1 to 20:1.

Sufficient water is then added to produce a solution comprising from 10% to 80% by weight of water. Best results are obtained with solutions comprising about 60% by weight of water.

The selected aromatic diamine (or mixture of diamines) is then added to the solution. Preferably, an approximately stoichiometric quantity of diamine to

dianhydride is used.

Finally, from 2% to 20% by weight (based on the weight of water used) of a tertiary amine is added to stabilise the solution. Best results are obtained with about 10% by weight of tertiary amine. Suitable amines include, for example, N-methylmorpholine, triethylamine, N-methylpyridine, and mixtures of two or more thereof.

Suitable aromatic diamines for use in the method of the invention include, for example, 4,4'-p-phenylenediisopropylidene bisaniline, 4,4'-diaminodiphenyl ether, 4,4'-diamino diphenylmethane, 1,4-diaminobenzene, 1,3-diaminobenzene, 4,4'-diaminodiphenyl sulfone, and mixtures of two or more thereof. Of these, 4,4'-diaminodiphenyl ether and 4,4'-diaminodiphenylmethane are preferred. The aromatic diamines may have an aliphatic moiety in the molecule.

Additives to improve various characteristics of the final coating may be added. Any appropriate additives may be used, such as fillers, pigments, fibres and surfactants. Typical surfactants include Dow Corning Corp. 190 or 193, FC430 from Minnesota Mining & Manufacturing Co., Zonyl FSC from E. I.du Pont de Nemours & Co., and L550 from Union Carbide Corp. While any suitable concentration may be used, a concentration of from 0.01% to 2% by weight (based on the weight of the solution before drying) is preferred. Of these surfactants, the best results have been obtained with Zonyl FSC.

Suitable fillers and reinforcing additives include, for example, Kevlar aramid fibres, graphite fibres, glass fibres, carbon and graphite powders, Teflon fluorocarbon powders, metal powders, and mixtures of two or more thereof.

If desired, the solution may be partially dried before it is applied to the surface to be coated. Alternatively, the solution may be coated on to the surface

and then partially dried to remove most of the solvents before the resin is cured.

The compositions of the invention may be coated on to any suitable surface by any suitable method. Smooth, flaw-free coatings may be formed, for example, on aluminium, steel, titanium, glass, and ceramics. Any suitable coating technique may be used to apply the composition, for example, dip, spray, roller or brush coating.

The polymerisation reaction which produces the coating is not fully understood. It appears to be an exchange reaction which produces a polyimide and liberates an amino acid. The coating is cured by heat. Temperatures of, for example, from 177$^{o}$ to 316$^{o}$C may be used over periods of 5 to 60 minutes.

The coating compositions of the present invention may also be used to bond surfaces together. At least one of the surfaces is coated, the surfaces are brought together (with or without preliminary drying of the coating to a tacky consistency), and the polyimide is cured using heat and pressure.

The coating composition of the invention may also be used to impregnate woven or matted high strength fibre fabrics, such as glass, graphite, aramid, or boron fibre fabrics. The fabrics are preferably first impregnated with the solution and then dried sufficiently to remove most of the residual solvents. The tacky fabric sheets are then stacked in the desired arrangement and shape, a pressure of from 138 to 689 kPa is applied, and the sheets are heated at a temperature of from 230$^{o}$ to 320$^{o}$C for about 30 to 120 minutes to cure the polyimide resin. A well-consolidated composite structure is obtained.

In order that the invention may be more fully understood, the following examples are given by way of illustration only. All parts and percentages are by weight.

Example 1

322.23 g (1.0mole) of 3,3',4,4'-benzophenonetetracarboxylic acid dianhydride (BTDA) and 305 g (2.7mole) of caprolactam were placed in a 2-litre flask and the mixture heated to 200°C and maintained at that temperature for 30 minutes. The mixture was then cooled to 120°C and 400 g of ethylene glycol monobutyl ether added. The mixture was stirred until homogeneous and 400 g of water added. The mixture was then cooled to just below 45°C and 198.2 g (1.0mole) of 4,4'-diaminodiphenylmethane added. The mixture was stirred for about 40 minutes. To the viscous liquid was added 40 g of N-methylmorpholine and the clear solution was stirred for about 20 minutes at 40°C. The liquid resin at this stage had a solids content of about 40% by weight. The liquid resin was brushed on to an aluminium plate and then dried in an air circulating oven at 250°C for one hour to produce a dry, smooth, flexible coating. The coating was further heated at 316°C for 20 minutes to produce a final coating which was thermally stable and resistant to oils and solvents.

Example 2

The procedure of Example 1 was repeated with four additional samples, but the quantity of caprolactam was varied. Whereas Example 1 used 305 g (2.7mole) of caprolactam to give a mole ratio of caprolactam to BTDA of 2.7:1, the four additional tests used caprolactam quantities of (a) 9.0 g (0.08mole, 0.08:1 ratio), (b) 150 g (1.3mole, 1.3:1 ratio), (c) 610 g (5.4mole, 5.4:1 ratio), and (d) 1220 g (10.8mole, 10.8:1 ratio). The properties of the coatings obtained from tests (b) and (c) were excellent. This demonstrated that the best results are obtained when the mole ratio of lactam and/or amino acid to dianhydride is in the range 1:1 to 6:1.

Example 3

The procedure of Example 1 was repeated, except that in place of ethylene glycol monoethyl ether, the following solvents were used: (a) ethylene glycol monobutyl ether and (b) ethylene glycol monoethyl acetate. In each case an excellent coating was obtained.

Example 4

The procedure of Example 1 was repeated, except that in place of 4,4'-diaminodiphenylmethane, the following diamines were used: (a) 1,4-diaminobenzene (1.5mole), (b) 4,4'-diaminodiphenyl sulfone (1.5mole), (c) 4,4'-diaminodiphenyl ether (1.5mole), (d) 4,4'-diaminodiphenylmethane (0.75mole) and 4,4'-diaminodiphenyl ether (0.75mole). In each case the resulting coating had excellent characteristics, with some variation in properties according to the nature of the diamine used.

Example 5

The procedure of Example 1 was repeated, but with the substitution of the following lactams and quantities for the 2.7mole of caprolactam used in Example 1: (a) 2-pyrrolidone (0.75mole), (b) 2-piperidone (0.75mole), (c) caprolactam (0.375mole) and 2-piperidone (0.375mole). In each case the resulting coating was excellent, with slight variations in physical properties according to the nature and quantity of the lactam used.

Example 6

The procedure of Example 1 was repeated, except that in place of N-methylmorpholine, the following tertiary amines were used: (a) triethylamine and (b) N-methylpyridine. These tertiary amines both gave good coatings.

Example 7

The procedure of Example 1 was repeated, except that in place of BTDA, the following dianhydrides were used: (a) pyromellitic dianhydride (218 g, 1.0mole) and (b) BTDA (161.1 g, 0.5mole) and 1,2,3,4-butane tetracarboxylic acid dianhydride (100 g, 0.5mole). Again, excellent coatings were obtained.

Example 8

Example 1 was repeated, except that the BTDA, caprolactam, ethylene glycol monobutyl ether and water were all placed together in the flask and heated at $100^{\circ}C$ for 70 minutes. The diamine and tertiary amine were then added as described in Example 1. An excellent coating was produced.

Other materials may be added to the compositions of the examples, such as fillers, colourants, ultraviolet absorbers, and the like.

CLAIMS:

1. A method of making a bisimide coating composition, which comprises:

(a) mixing at least one lactam and/or amino acid (component A) with at least one dianhydride (component B) in a mole ratio of A:B of from 0.01:1 to 10:1 to form an N,N'-disubstituted bisimide dicarboxylic acid,

(b) dissolving the product from step (a) in a water-miscible solvent,

(c) mixing water with the solution from step (b) to form a solution comprising from 10% to 80% by weight of water,

(d) mixing at least one aromatic diamine (component C) with the solution from step (c), and

(e) mixing at least one tertiary amine (component D), in an amount of from 2% to 20% by weight based on the water added in step (c), with the solution from step (d) to give the coating composition.

2. A method according to claim 1, in which component A is a lactam of the formula:

$$H_2C-(CH_2)_x-NHCO$$

where x is an integer of from 2 to 7.

3. A method according to claim 1 or 2, in which at least 50 mol% of component B is 3,3',4,4'-benzophenone tetracarboxylic acid dianhydride and/or pyromellitic dianhydride.

4. A method according to any of claims 1 to 3, in which up to 50 mol% of component B is 1,2,3,4-butane tetracarboxylic acid dianhydride.

5. A method according to any of claims 1 to 4, in which the solvent is ethylene glycol monoethyl ether, ethylene glycol monobutyl ether, ethylene glycol monoethyl ether acetate, ethylene glycol monobutyl ether acetate, ethylene glycol, or a mixture of two or more thereof.

6. A method according to any of claims 1 to 5, in which component C is 4,4'-p-phenylenediisopropylidene bisaniline, 1,3-diaminobenzene, 1,4-diaminobenzene, 4,4'-diaminodiphenyl ether, 4,4'-diaminodiphenylmethane, 4,4'-diaminodiphenyl sulphone, or a mixture of two or more thereof.

7. A method according to any of claims 1 to 5, in which at least one diamine in component C contains an aliphatic moiety in the molecule.

8. A method according to any of claims 1 to 7, in which the mole ratio of B:C is approximately 1:1.

9. A method according to any of claims 1 to 8, in which component D is N-methylmorpholine, triethylamine, N-methylpyridine, or a mixture of two or more thereof.

10. A method of forming a coating on the surface of a substrate, in which the composition made by the method according to any of claims 1 to 9 is applied to the surface of a substrate and the coated substrate is heated to form a polyimide coating.